# EUROPEAN PATENT SPECIFICATION

(11) **EP 1 535 729 B1**
(45) Date of publication and mention of the grant of the patent: **13.06.2012**
(21) Application number: 03741419.0
(22) Date of filing: 16.07.2003
(51) Int. Cl.: B32B 7/02, B29C 65/36, B65B 51/10, B65B 51/22, B65D 65/40

(54) **LAMINATED MATERIAL, PROCESS FOR PRODUCING LAMINATED MATERIAL, METHOD OF HEAT SEALING LAMINATED MATERIAL AND PACKAGING CONTAINER**
LAMINIERTES MATERIAL, PROZESS ZUR HERSTELLUNG VON LAMINIERTEM MATERIAL, VERFAHREN ZUR HEISSSIEGELUNG VON LAMINIERTEM MATERIAL UND VERPACKUNGSBEHÄLTER
MATERIAU FEUILLETE, PROCEDE DE PRODUCTION DE CE MATERIAU FEUILLETE, PROCEDE DE THERMOSOUDAGE D'UN MATERIAU FEUILLETE ET UN CONTENANT D'EMBALLAGE

(30) Priority: 19.07.2002 JP 2002211182; 28.02.2003 JP 2003053245
(43) Date of publication of application: 01.06.2005
(73) Proprietor: Tetra Laval Holdings & Finance S.A., 1009 Pully (CH)
(72) Inventor: KIKUCHI, Hideyo, Nihon Tetra Pak K.K., Chiyoda-ku, Tokyo 102-8544 (JP)
(74) Representative: Müller Schupfner & Partner
(86) International application number: PCT/JP2003/009009
(87) International publication number: WO 2004/009345

(56) References cited:
- WO-A-97/02139
- JP-A- 2 147 326
- JP-A- 2 180 105
- JP-A- 4 019 139
- JP-A- 11 029 110
- US-A- 4 264 668
- DATABASE WPI Week 200157 Derwent Publications Ltd., London, GB; AN 2001-517039 XP002422288 -& JP 2001 130629 A (TOPPAN PRINTING CO LTD) 15 May 2001 (2001-05-15)
- DATABASE WPI Week 200159 Derwent Publications Ltd., London, GB; AN 2001-532688 XP002422287 -& JP 2001 192018 A (DAINIPPON PRINTING CO LTD) 17 July 2001 (2001-07-17)

## Description

### Technical Field

The present invention relates to a laminated material, a method of producing the laminated material, a method of heat sealing the laminated material and a packaging container.

### Background Art

A web-form laminated material used for packaging containers comprising a support layer and a thermoplastic innermost layer in which a carbon black conductive layer is laminated between the support layer and the thermoplastic innermost layer at zones where heat-sealing is conducted by high-frequency induction heating for forming a container is known (for example, as described in JP-B No. 63-222). In the laminated material shown in Fig. 1, a support layer, a thermoplastic innermost layer and a carbon black conductive layer as an intermediate layer therebetween are constituted.

A packaging machine in which an attaching device for attaching an aluminum foil tape for high-frequency induction heating to a portion of a web-form laminated material to be heat sealed is disposed to conduct high-frequency induction heating the aluminum foil tape by high-frequency coils of a heater is described, for example, in JP No. 2694286.

Packaging paper containers for liquid foodstuffs are classified into aseptic packaging storable at a normal temperature and chilled packaging put under chilled distribution such as milk containers. Respective packaging laminated materials are generally produced as aseptic packaging and chilled packaging separately, and filled and packaged with liquid foodstuffs by separate sealing methods by means of separate filling and packaging machines.

However, even for different packaging systems of aseptic packaging and chilled packaging efficient running/employment/operation of the whole packaging system are allowed through diversion or transfer of parts of different packaging systems and, further, this contributes to the saving of energy and materials and the reduction of production cost.

US-4,264,668 relates to a laminated material comprising an outer thermoplastic layer and a second layer arranged adjoining the thermoplastic layer, which second layer is adapted so that it can be heated by means of a high-frequency electric field and transmits by convection the heat generated in the second layer to the thermoplastic layer.

WO 97/02139 relates to a packaging laminate for the manufacturing of packaging containers as well as a method for the manufacturing of a dimensional stable and impermeable packaging container, comprising a thermoformable base layer, a barrier layer and a laminate layer adjacent the barrier layer and directed towards the inside of the container contemplated.

EP 0 628 493 A1 discloses an inner sealing material of a lid comprising a membrane layer having at least metal layer and a reseal layer having an elastic sheet layer. The membrane layer comprises a release layer which is overlaid with an adhesive layer, whereas the reseal layer comprises a thermoplastic layer. The inner sealing material can be subjected to high-frequency.

EP 1 234 771 A1 discloses a high frequency heat-sealing apparatus for sealing a packing material being made by a laminate including a thermoplastic resin layer and a conductive material layer to be heated by high-frequency heating, wherein the conductive material layer is formed of an aluminium foil.

It is the object of the invention to provide a laminated material for packaging containers, a method of producing a web-formed laminated material used for packaging containers, a method of heat-sealing a laminated material and a packaging container formed of web-formed laminated material, which can be used for aseptic packaging and chilled packaging and by means of which energy and material can be saved, so that the production costs can be reduced.

This object is fulfilled by a laminated material for packaging containers having the features disclosed in claim 1, by a method of producing a web-formed laminated material used for packaging container having the features disclosed in claim 8, by a method of heat sealing a laminated material having the features disclosed in claim 10 and by a packaging container formed of a web-formed laminated material having the features disclosed in claim 12. Preferred embodiments are subject of the depend claims.

The laminated material and the packaging container according to the invention is a web-form laminated material used for packaging containers comprising a support layer and a thermoplastic innermost layer in which a conductive layer that is disposed on a base film made of polyester or on a tape made of polyester is laminated between the support layer and the thermoplastic innermost layer at zones where heat-sealing is conducted by high-frequency induction heating for forming the container so that the heat generated by induction heating is conducted to the innermost layer, and the conductive layer comprises a thin film/formed layer substantially comprising a metallic conductive material.

The thin film /formed layer in the invention means that it does not include metal foils such as aluminum foils and steel foils and means layer/film formed by the steps of vapor deposition, plating, printing, etc.

Thus, even for different packaging system of aseptic packaging and chilled packaging efficient running/employment/operation of the whole packaging system are allowed through diversion or transfer of parts of different packaging systems and, further, this contributes to the saving of energy and materials and the reduction of production cost.

### Brief Description of Drawings

Fig. 1 is a cross sectional view for a portion of a web-form laminated material as an embodiment according to the present invention.
Fig. 2 is a plan view for a portion of a web-form laminated material as an embodiment according to the invention.
Fig. 3 is a plan view showing the joining of laminated materials in an embodiment of the invention.
Fig. 4 is a schematic view for a packaging and filling machine used in the invention.
Fig. 5 is a schematic view for a transversal sealing device of a filling machine used in the invention.

### Best Mode for Carrying Out the Invention

Embodiments of the present invention are to be described specifically below.

The invention for the laminated material is a web-form laminated material used for packaging containers comprising at least a support layer and a thermoplastic innermost layer, in which
a conductive layer is laminated between the support layer and the thermoplastic innermost layer at zones where heat-sealing is conducted by high-frequency induction heating for forming the container so that the heat generated by the induction heating is conducted to the innermost layer and
the conductive layer is a thin film/formed layer substantially comprising a metallic conductive material.

Preferably, the conductive layer is a metal vapor deposited layer comprising a metallic conductive material disposed on an vapor deposited tape.

Preferably, the conductive layer is a metal vapor deposited layer comprising a metallic conductive material disposed on the inner surface of a substrate film for an vapor deposited film laminated between the support layer and the thermoplastic innermost layer.

Preferably the conductive layer is a metal vapor deposited layer comprising a metallic conductive material disposed on the outer surface of a substrate film of an vapor deposited film laminated between the support layer and the thermoplastic innermost layer.

The invention for the method of producing the laminated material according to is a method of producing a web-form laminated material used for packaging containers comprising at least a support layer and a thermoplastic innermost layer which includes, providing a plurality of material rolls for the support layer, delivering web-form support layers successively from the material rolls, laminating a vapor deposited film comprising a substrate film and a metal vapor deposited layer of a metallic conductive material formed on the inner surface or the outer surface of the substrate film to the inner surface of the support layer including zones where heat-sealing is conducted by high-frequency induction heating for forming the container, printing a container design indirectly or directly to the outer surface of the long web-form support layer, forming identical or different kind of single or multiple thermoplastic layers simultaneously or successively to the printed outer surface and inner surface of the web-form support layer, and joining the top end of the web-form support layer at the upstream with the rear end of the web-form support layer at the downstream thereby forming a longer web-form support layer.

The invention for the method of heat sealing the laminated material includes, providing a web-form laminated material that is the laminated material used for packaging containers comprising at least a support layer and a thermoplastic innermost layer, in which a conductive layer is laminated between the support layer and the thermoplastic innermost layer at zones where heat-sealing is conducted by high-frequency induction heating for forming the container so that the heat generated by the induction heating is conducted to the innermost layer, and the conductive layer is a thin layer substantially comprising a metallic conductive material formed by vapor deposition, forming the web-form laminated material into tubular shape and applying a longitudinal seal in the longitudinal direction, filling a liquid foodstuff in the laminated material tube, forming heat-sealed zones by the high-frequency induction heating every predetermined interval in the traversing direction of the filled tube, and casting the center of each sealed zone, thereby forming individual containers.

The invention for the packaging container is a packaging container formed of a laminated material comprising at least a support layer and a thermoplastic innermost layer in which a conductive layer of a thin film/formed layer substantially comprising a metallic conductive material is formed at zones where heat-sealing is conducted by high-frequency induction heating for forming the container, the innermost layer is melted or softened by the heat generated by the induction heating to form a sealing zone with the opposing softened or melted innermost layer.

The invention having the constitutions described above have the following functions.

The web-form laminated material used for packaging containers according to the invention is in an elongate strip-form (web-form) capable of forming a number of containers and, that enables filling-up and production of packaging containers continuously at a high speed.

In the invention, the support layer provides the packaging container and the laminated material with a physically mechanical strength and maintains and supports the shape and form, etc. thereof. The thermoplastic innermost layer is also the innermost layer for the wall of the container and is in direct contact with a liquid foodstuff to prevent permeation/moistening of liquid relative to the support layer of the container. Further, the innermost layer is melted and softened by heat to form sealing zones in the heat-sealing.

The conductive layer is a thin film/formed layer substantially comprising a metallic conductive material. The thin film/formed layer in the form means that it does not include metal foils such as aluminum foils and steel foils but is a layer/film formed by the step of vapor deposition. Since the conductive layer has electric conductivity, when a high-frequency current is applied to external coils, an induced current is generated by high-frequency induction in the conductive layer and the heat caused by the resistance melts and seals the plastic material (thermoplastic material/resin) of the adjacent innermost layer. That is, in the invention, the conductive layer is inductively heated by high-frequency induction heating upon formation of the container, the generated heat is conducted to the innermost layer, by which the thermoplastic innermost layer is heated and melted and softened. At the heated regions, heat seal zones are formed.

In the preferred embodiment of the invention, the conductive layer is a metal vapor deposited layer comprising a metallic conductive material disposed on a vapor deposited tape.

In this embodiment, it is possible to use a vapor deposited tape obtained by vacuum evaporating a metal, for example, metallic aluminum, aluminium alloy or the like to the outer surface of a substrate film formed of polyester. Various methods can be adopted for the method of metal vapor deposition and for the thickness of the vapor deposited layer. For example, a vacuum vapor deposition method, a sputtering method, a plasma method and the like are used for the vapor deposition method.

The vapor deposited tape is reduced in the layer thickness because of vapor deposition and is excellent in the flexibility and operationality compared with an aluminum foil tape or composite tape of an aluminum foil. Accordingly, the vapor deposited tape can be used also in high speed packaging and filling machines.

In a preferred embodiment of the invention, the conductive layer is a metal vapor deposited layer comprising a metallic conductive material disposed on the inner surface of a substrate film of an vapor deposited film laminated between a support layer and a thermoplastic innermost layer.

In this embodiment, the layer constitution for the web-form laminated material used for packaging containers comprises support layer/vapor deposited film (substrate film/ metal vapor deposited layer)/thermoplastic innermost layer, from the outside to the inner side. In this embodiment, the metal vapor deposited layer is disposed on the inner side.

The advantage of this embodiment is that the vapor deposited film can be laminated not only at the zones where heat-sealing is conducted by high-frequency induction heating for forming the container but also substantially over the entire surface of the laminated material. Accordingly, formation of the conductive layer and formation of a barrier layer of the invention can be conducted simultaneously by laminating the vapor deposited film instead of the conventional laminate (lamination layer) of the aluminum foil in the production step of the laminated material.

In the preferred embodiment of the invention, the conductive layer is a metal vapor deposited layer comprising a metallic conductive material disposed on the outer surface of the substrate film of the vapor deposited film laminated between the support layer and the thermoplastic innermost layer.

In this embodiment, the layer constitution of the web-form laminated material used for packaging containers comprises support layer/vapor deposited film (metal vapor deposited layer/substrate film)/thermoplastic innermost layer, from the outside to the inner side. In this embodiment, the metal vapor deposited layer is disposed on the outside of the vapor deposited film.

The advantage of this embodiment is that the vapor deposited film can be laminated not only to the zones where heat-sealing is conducted by the high-frequency induction heating for forming the container but also substantially over the entire surface of the laminated material like the embodiment as described above. Accordingly, formation of the conductive layer and formation of the barrier layer can be conducted simultaneously by laminating the vapor deposited film in the production of the laminated material.

Further, by adding a white masking agent to the substrate film, the metallic luster color of the metal vapor deposited layer can be masked.

In a method of producing the web-form laminated material in the preferred embodiment of the invention, a plurality of material rolls for the support layers are provided, the web-form support layers are successively delivered from the material rolls, an vapor deposited film comprising a substrate film and a metal vapor deposited layer of a metallic conductive material formed to the inner surface or the outer surface of the substrate film is laminated to the inner surface of the support layer including zones where heat-sealing is conducted by high-frequency induction heating for forming the container, a container design is printed indirectly or directly to the outer surface of the long web-form support layer; identical or different kind of single or multiple thermoplastic layers are formed simultaneously or successively to the printed outer surface and inner surface of the web-form support layers, the top end of the web-form support layer at the upstream and the rear end of the web-form support layer at the downstream are joined to form a longer web-form support layer.

The advantage of the embodiment is that the vapor deposited film can be laminated not only to zones where heat-sealing is conducted by the high-frequency induction heating for forming the container but also substantially over the entire surface of the laminated material as described above, the vapor deposited film can be laminated instead of the conventional laminate (lamination layer) of the aluminum foil in the production step of the laminated material, and formation of the conductive layer and formation of the barrier layer can be conducted simultaneously in the invention.

The method of heat sealing the laminated material according to the invention provides the laminated material of the invention, that is, a web-form laminated material comprising a support layer and a thermoplastic innermost layer, in which a conductive layer is laminated between the support layer and the thermoplastic innermost layer at zones where heat-sealing is conducted by high-frequency induction heating for forming the container so that the heat generated by the induction heating is conducted to the innermost layer and the conductive layer is a layer formed by vapor deposition. The web-form laminated material is usually taken-up as a rolled form and stored or conveyed.

For example, a rolled web-form laminated material is loaded to a packaging and filling machine, and the laminated material is delivered from the roll and then conveyed into the filling machine. The web-form laminated material under conveyance is formed into a tubular shape during lowering. A longitudinal seal is applied to the longitudinal direction of the laminated material to provide a liquid tight state with no liquid leakage. In case of applying the longitudinal sealing by the high-frequency induction heating, heat-sealing zones are formed by the high-frequency induction heating.

A liquid foodstuff is filled fully in the laminated material tube.

Heat-sealing zones are formed by the high-frequency induction heating every predetermined interval in the traversing direction of the filled tube and, preferably, under a liquid surface and transversal sealing is done. Then, the center of the sealing zones is cut, for example, by a cutter knife to form individual containers and, optionally, it is folded along the creases into a final shape.

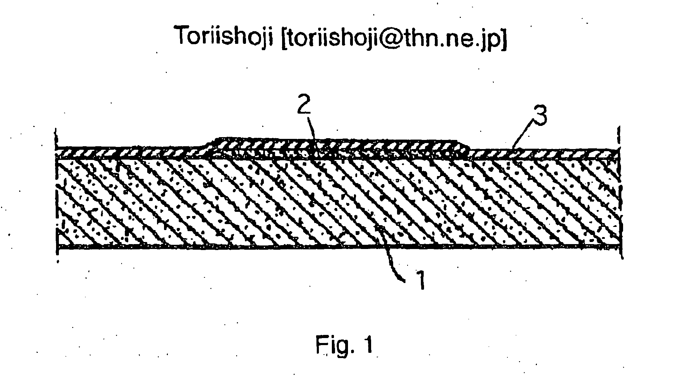

Then, preferred embodiments of the invention are to be described with reference to Fig. 1 to Fig. 5.

### (Embodiment 1)

Fig. 1 shows a cross sectional view for a portion of a web-form laminated material as an embodiment according to the invention. In Fig. 1, the laminated material comprises a support layer1 made of paper, card board, plastic material or a composite material thereof, a thermoplastic innermost layer 3 such as one made of low density polyethylene or linear chain low density polyethylene, and a conductive layer 2 laminated between the support layer 1 and the thermoplastic innermost layer 3 so that the heat generated by induction heating at the zones where heat-sealing is conducted by the high-frequency induction heating is conducted to the innermost layer 3.

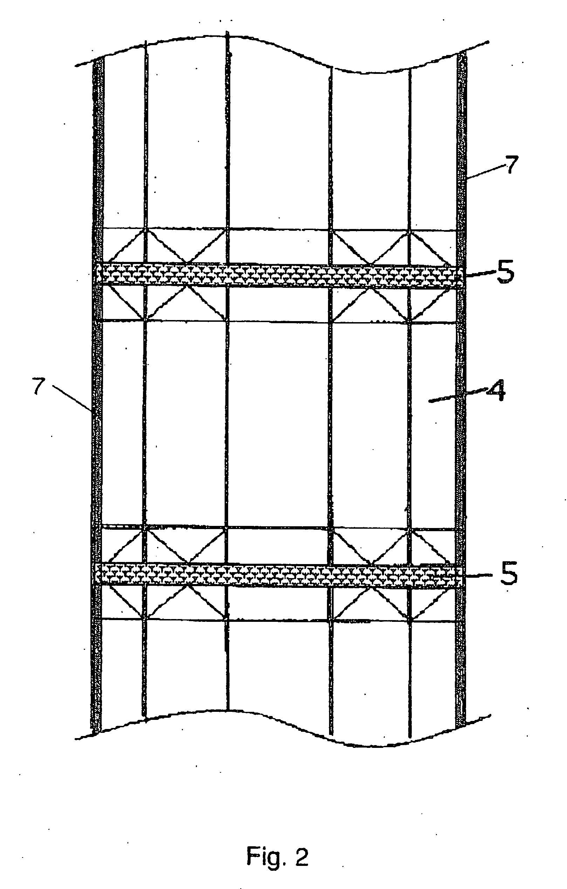

Fig. 2 is a plan view showing a portion of a web-form laminated material as an embodiment of the invention. In Fig. 2, a web-shaped laminated material 4 is a laminated material of a support layer comprising paper, plastic or a composite material thereof and a thermoplastic layer such as one formed of low density polyethylene. A plurality of packaging containers are obtained from the laminated material in which a portion between two sealing zones 5 for transversal sealing in the transversal direction corresponds to one packaging container. A conductive layer is laminated between the support layer and the thermoplastic innermost layer so that the heat generated by the induction heating at the zones 5 where the heat-sealing is conducted by the high-frequency induction heating is conducted to the innermost layer.

In case of longitudinal sealing by high-frequency induction heating, the conductive layer is laminated also at both end portions 7 of the web-form laminated material so as to form heat-sealing zones by the high-frequency induction heating.

The conductive layer is laminated to the zones 5 and the vicinity thereof as shown in Fig. 2, as well as also to both end portions 7 and 7 in case of applying a longitudinal sealing by the high-frequency induction heating.

### (Embodiment 2)

In the method of producing a web-form laminated material of the embodiment according to the invention, a plurality of paper material rolls are provided.

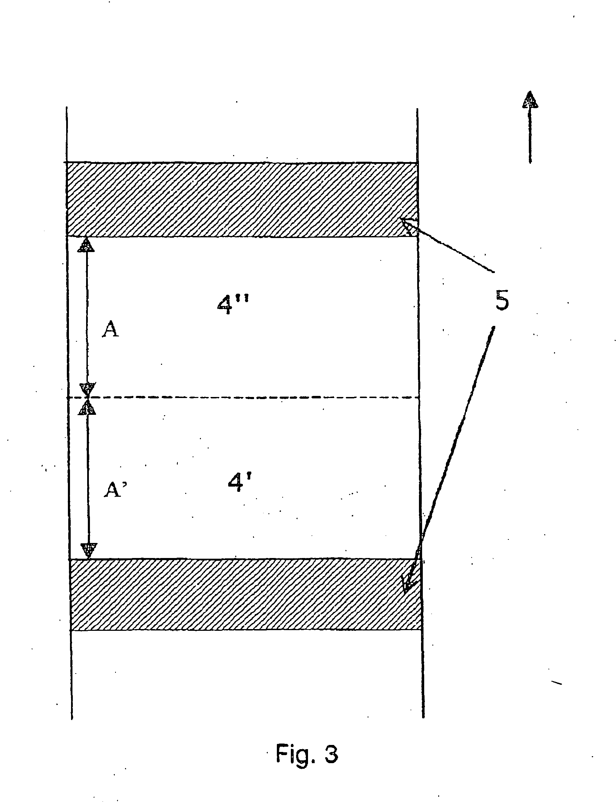

Fig. 3 is a plan view showing the state of joining the final end of a laminated material 4" from a first roll and the top end of a laminated material 4' from a second roll. It is accurately cut at the middle between a sealing zone of the laminated material 4" and the sealing zone 5 of the laminated material 4'. As shown in Fig. 3, the final end of the laminated material web 4" and the top end of the laminated material web 4' are cut with an identical length four the distance A and the distance A' in Fig. 3 and the cut end faces of both of the materials are joined in a temporarily stationary state. The width for the conductive layer may be taken larger than a necessary width for acquiring a sealing property to provide a margin capably of absorbing expansion and contraction of paper.

As described above, the top end of the web-form support layer at the upstream and the rear end of the web-form support layer at the downstream are joined to form a longer web-form support layer. The obtained web can be stored as a roll. Alternatively, it can be continuously supplied to the downstream step without storage.

For the web, a container design is printed indirectly or directly to the outer surface of the web-form support layer in the printing step. Here, the phrase of "indirectly or directly" means that a plastic laminate layer, a film layer, an adhesive layer, an anchor coat layer or the like may also be laminated between the printed layer for a pattern or design and the support layer surface.

Identical or different kind of single or multiple thermoplastic layers are formed simultaneously or successively to the printed outer surface and inner surface of the web-form support layer. As a result, single or multiple outermost layers and an innermost layer are formed. Further, for facilitating the formation of the container in the midway step, ruled lines (folds or creases) are formed optionally to the laminated material.

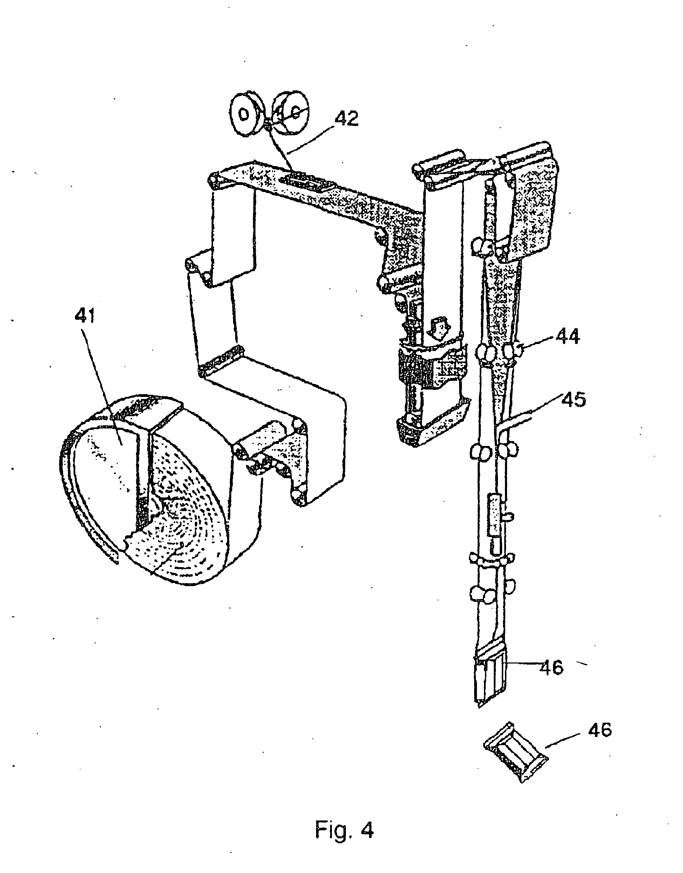

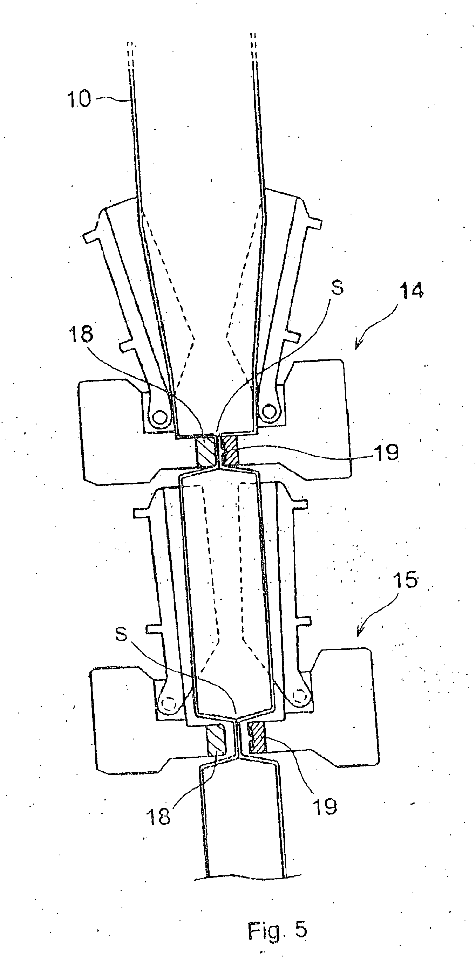

A method of heat sealing the laminated material in an embodiment of the invention is to be described with reference to Fig. 4 and Fig. 5. Fig. 4 is a schematic view for a packaging and filling machine used in the invention.

The laminated material of the invention, that is, a web-form laminated material comprising a support layer, a thermoplastic innermost layer and a conductive layer is provided. A rolled web-form laminated material 41 is loaded on a packaging and filling machine, and the laminated material is delivered from the roll 41 and conveyed into the filling machine. A web-form laminated material under conveyance is attached with a strip tape for longitudinal sealing by an applicator 42 and then formed into a tubular shape while lowering by a roller 44. It is applied with longitudinal sealing in the longitudinal direction of the laminated material and formed into a liquid tight state with no liquid leakage. In case of joining the strip tape for longitudinal sealing to one end of the laminated material by high-frequency induction heating, the conductive layer is laminated also at its one end 7. Further, in case of applying the longitudinal sealing by the high-frequency induction heating, the conductive layer is laminated also to both the ends 7 and 7 of the laminated material web for forming heat-sealing zones by the high-frequency induction heating.

A liquid foodstuff is poured fully into the laminated material tube from a filling pipe 45.

A heat-sealing zone is formed by the high-frequency induction heating in the traversing direction of the thus filled tube, under a liquid surface on every predetermined interval and then transversal sealing is conducted by a transversal sealing device (shown in Fig. 5).

Then, the center for each sealing zone described is cut by a cutting knife, etc. to form individual containers 46 which are folded along the creases if necessary to form each into a final shape.

Fig. 5 is a schematic view of a transversal sealing device of the filling machine.

As shown in Fig. 5, two sets of transversal sealing devices 14 and 15 moving vertically press the filled laminated material tube 10 in the traversing direction by a high-frequency induction heating inductor 19 and a counter jaw 18, heat and cool the same and form a heat sealing zone S on every predetermined interval by high-frequency induction heating to apply transversal sealing.

Then, the center of each sealing zone S described is cut by a cutting knife (not illustrated) to form individual containers.

In addition to the container shape in the embodiment described above, the packaging container in the invention includes, for example, a brick-shape (parallelepiped), as well as hexagonal prism, octagonal prism, tetrahedral shape, gable-top containers and the like.

As has been described above, the following advantageous effect can be obtained according to the invention.

Even for different packaging systems of aseptic packaging and chilled packaging, since a portion of different packaging systems can be diverted or transferred, this enables efficient running/employment/operation of a whole packaging system and, further, this can contribute to the saving of energy and material and reduction of production cost.

This invention enables to form sealing/joining by a novel sealing method and exact treatment is possible within a printing press during high speed printing by utilizing an automatic joining device and it can be conducted at a mass production level of a large-scaled flexographic printing press or photogravure printing press.

According to the method of the invention, the rapid and reliable sealing method can be applied to inexpensive packaging material not containing a metal foil layer at all.

### Industrial Applicability

The paper packaging laminated material, the paper packaging container according to the invention is utilized to packaging containers for containing liquid foodstuffs such as milk, beverages, and the like.

## Claims

1. A laminated material for packaging containers (46)
comprising at least
a support layer (1),
a thermoplastic innermost layer (3) and
a conductive layer (2) that is disposed on a base film (9) made of polyester or on a tape made of polyester,
wherein said conductive layer (2) is disposed between said support layer (1) and said thermoplastic innermost layer (3)
wherein the laminate material (4) is web-formed for forming of a continuous tube (10) which is to be filled with the filling goods and divided into individual containers (46), and
the conductive layer (2) is a thin vapor deposited metal layer, which is provided at least at zones (5, 7) to be heat sealed by high-frequency induction heating for producing and forming the containers (46).

2. A laminated material according to claim 1, wherein said conductive layer (2) comprises a metallic electrically conductive material.

3. A laminated material according to one of the proceeding claims, wherein said conductive layer (2) is disposed on the outer surface of said base film (9) and/or tape and/or thermoplastic innermost layer (3).

4. A laminated material according to one of the proceeding claims, wherein said conductive layer (2) is disposed on the surface of said base film (9) and/or tape and/or thermoplastic innermost layer (3).

5. A laminated material according to one of the proceeding claims, wherein said conductive layer (2) is disposed on the inner surface of said support layer (1).

6. A laminated material according to one of the proceeding claims, wherein said thermoplastic innermost layer (3) is made of polyethylene.

7. A laminated material according to claim 6, wherein said thermoplastic innermost layer (3) is made of low density polyethylene (LDPE) or of linear chain low density polyethylene (LLDPE).

8. A method of producing a web-formed laminated material used for a packaging container (46) comprising at least a support layer (1) and a thermoplastic innermost layer (3), which includes,
delivering a web-formed support layer (1) from a material roll,
laminating a vapor deposited film comprising a substrate film (9) made of polyester and a vapor deposited metal layer of a metallic conductive material formed on the inner surface or on the outer surface of the substrate film (9) to the inner surface of the support layer (1) at least at zones (5, 7) where heat-sealing is conducted by high-frequency induction heating for forming the container (46),
printing a container design indirectly or directly to the outer surface of the long web-form support layer (1), and
forming identical or different kind of single or multiple thermoplastic layers simultaneously or successively to the printed outer surface and inner surface of the web-form support layer (1).

9. A method according to claim 8, wherein the method further includes steps of providing a plurality of material rolls for the support layer (1) and
joining the top end of the web-formed support layer (1) at the upstream with the rear end of the web-formed support layer (1) at the downstream, thereby forming a longer web-form.

10. A method of heat sealing a laminated material, which includes,
providing a web-form laminated material that is the laminated material used for packaging container (46) comprising at least of a support layer (1) and a thermoplastic innermost layer (3), in which
a conductive layer (2) is laminated between the support layer (1) and the thermoplastic innermost layer (3) at least at zones (5, 7) where heat-sealing is conducted by high-frequency induction heating for forming the container (46) so that the heat generated by the induction heating is conducted to the thermoplastic innermost layer (3), wherein the conductive layer (2) is a thin layer substantially comprising a metallic conductive material formed by vapor deposition on a substrate film (9) made of polyester,
forming the web-formed laminated material into a tubular shape and applying a longitudinal sealing zone (7) in the longitudinal direction,
filling the laminated material tube with a liquid foodstuff,
forming traversing heat-sealing zones (5) by the high-frequency induction heating every predetermined interval in the traversing direction of the filled tube, and cutting the center of each traversing sealing zone (5),
thereby forming individual containers (46).

11. A method according to claim 10, wherein the longitudinal seal is formed by high-frequency induction heating.

12. A packaging container formed of a web-formed laminated material comprising at least a support layer (1) and a thermoplastic innermost layer (3) in which a conductive layer (2) of a thin film/formed layer substantially comprising a metallic conductive material and formed by vapor deposition on a substrate film (9) made of polyester is formed at least at zones (5, 7) where heat-sealing is conducted by high-frequency induction heating for forming the container (46), the innermost layer is melted or softened by the heat generated by the induction heating to form a sealing zone (5, 7) with the opposing softened or melted innermost layer.

13. A packing container for liquid foodstuff formed of a web-formed laminated material, said packaging container (46) being sealed according to the sealing method of claim 10 or 11.

## Patentansprüche

1. Laminiertes Material für Verpackungsbehälter (46),
wenigstens umfassend
eine Trägerschicht (1),
eine thermoplastische innerste Schicht (3), und
eine leitfähige Schicht (2), welche auf einem Basisfilm (9) aus Polyester oder auf einem Band aus Polyester angeordnet ist,
wobei die leitfähige Schicht (2) zwischen der Trägerschicht (1) und der thermoplastischen innersten Schicht (3) angeordnet ist,
wobei das Laminatmaterial (4) bahnförmig ist zur Bildung eines durchgehenden Rohrs (10), welches mit den einzufüllenden Gütern zu füllen ist und in einzelne Behälter (46) unterteilt wird, und
die leitfähige Schicht (2) eine dünne aufgedampfte Metallschicht ist, welche wenigstens in Bereichen (5, 7) vorgesehen ist, um zur Herstellung und Bildung der Behälter (46) durch Hochfrequenzinduktionserwärmung heißgesiegelt zu werden.

2. Laminiertes Material nach Anspruch 1, wobei die leitfähige Schicht (2) ein metallisches elektrisch leitfähiges Material umfasst.

3. Laminiertes Material nach einem der vorhergehenden Ansprüche, wobei die leitfähige Schicht (2) auf der äußeren Oberfläche des Basisfilms (9) und/oder des Bands und/oder der thermoplastischen innersten Schicht (3) angeordnet ist.

4. Laminiertes Material nach einem der vorhergehenden Ansprüche, wobei die leitfähige Schicht (2) auf der Oberfläche des Basisfilms (9) und/oder des Bands und/oder der thermoplastischen innersten Schicht (3) angeordnet ist.

5. Laminiertes Material nach einem der vorhergehenden Ansprüche, wobei die leitfähige Schicht (2) auf der inneren Oberfläche der Trägerschicht (1) angeordnet ist.

6. Laminiertes Material nach einem der vorhergehenden Ansprüche, wobei die thermoplastische innerste Schicht (3) aus Polyethylen ist.

7. Laminiertes Material nach Anspruch 6, wobei die thermoplastische innerste Schicht (3) aus Polyethylen niederer Dichte (low density polyethylene, LDPE) oder linearem Polyethylen niederer Dichte (linear chain low density polyethylene, LLDPE) ist.

8. Verfahren zur Herstellung eines bahnförmigen laminierten Materials, welches für einen Verpackungsbehälter (46) verwendet wird, umfassend wenigstens eine Trägerschicht (1) und eine thermoplastische innerste Schicht (3), wobei das Verfahren beinhaltet,
Liefern einer bahnförmigen Trägerschicht (1) von einer Materialrolle, Laminieren eines aufgedampften Films umfassend einen Substratfilm (9) aus Polyester und eine aufgedampfte Metallschicht aus einem metallischen leitfähigen Material, welches auf der inneren Oberfläche oder auf der äußeren Oberfläche des Substratfilms (9) zu der inneren Oberfläche der Trägerschicht (1) wenigstens in Bereichen (5, 7), wo Heißsiegeln mittels Hochfrequenzinduktionserwärmung zur Bildung der Behälter (46) durchgeführt wird, gebildet wird,
Drucken eines Behälterdesigns indirekt oder direkt auf die äußere Oberfläche der langen bahnförmigen Trägerschicht (1), und
gleichzeitig oder hintereinander Bilden der identischen oder einer anderen Art einzelner oder mehrfacher thermoplastischer Schichten auf der gedruckten äußeren Oberfläche und inneren Oberfläche der bahnförmigen Trägerschicht (1 ).

9. Verfahren nach Anspruch 8, wobei das Verfahren weiter die Schritte beinhaltet, dass eine Vielzahl von Materialrollen für die Trägerschicht (1) zur Verfügung gestellt wird und dass das obere Ende der bahnförmigen Trägerschicht (1) stromaufwärts mit dem hinteren Ende der bahnförmigen Trägerschicht (1) stromabwärts zusammengefügt wird, wodurch eine längere Bahnform gebildet wird.

10. Verfahren zum Heißsiegeln eines laminierten Materials, welches beinhaltet zur Verfügung Stellen eines bahnförmigen laminierten Materials, welches das laminierte Material ist, welches für den Verpackungsbehälter (46) umfassend wenigstens eine Trägerschicht (1) und eine thermoplastische innerste Schicht (3) verwendet wird, wobei
eine leitfähige Schicht (2) laminiert wird zwischen der Trägerschicht (1) und der thermoplastischen innersten Schicht (3) wenigstens in Bereichen (5, 7), wo Heißsiegeln mittels Hochfrequenzinduktionserwärmung zur Bildung des Behälters (46) durchgeführt wird, so dass die durch die Induktionserwärmung erzeugte Wärme zu der thermoplastischen innersten Schicht (3) geleitet wird, wobei die leitfähige Schicht (2) eine dünne Schicht ist, welche im Wesentlichen ein metallisches leitfähiges Material, welches durch Aufdampfen auf einen Substratfilm (9) aus Polyester gebildet wird, umfasst,
Bilden des bahnförmigen laminierten Materials zu einer Röhrenform und Aufbringen eines länglichen Versiegelungsbereichs (7) in der Längsrichtung, Einfüllen eines flüssigen Nahrungsmittels in die laminierte Materialröhre, Bilden querender Heißsiegelbereiche (5) durch die Hochfrequenzinduktionserwärmung in jedem vorbestimmten Abstand in der Querungsrichtung des gefüllten Rohrs, und Schneiden der Mitte jedes querenden Versiegelungsbereichs (5),
wodurch einzelne Behälter (46) gebildet werden.

11. Verfahren nach Anspruch 10, wobei die längliche Versiegelung mittels Hochfrequenzinduktionserwärmung gebildet wird.

12. Verpackungsbehälter, welcher gebildet wird aus einem bahnförmigen laminierten Material umfassend wenigstens eine Trägerschicht (1) und eine thermoplastische innerste Schicht (3), in welcher eine leitfähige Schicht (2) aus einem dünnem Film/geformte Schicht im Wesentlichen umfassend ein metallisches leitfähiges Material und gebildet durch Aufdampfen auf einen Substratfilm (9) aus Polyester wenigstens in Bereichen (5, 7) gebildet wird, wo Heißsiegeln mittels Hochfrequenzinduktionserwärmung zur Bildung des Behälters (46) durchgeführt wird, die innerste Schicht durch die durch die Induktionserwärmung erzeugte Wärme geschmolzen oder weich gemacht wird, um einen Versiegelungsbereich (5, 7) mit der gegenüberliegenden weich gemachten oder geschmolzenen innersten Schicht zu bilden.

13. Verpackungsbehälter für ein flüssiges Nahrungsmittel, welcher gebildet wird aus einem bahnförmigen laminierten Material, wobei der Verpackungsbehälter (46) nach dem Versiegelungsverfahren von Anspruch 10 oder 11 versiegelt wird.

## Revendications

1. Matériau stratifié pour conteneur d'emballage (46), comprenant au moins une couche support (1),
une couche intérieure thermoplastique (3) et
une couche conductrice (2) qui est disposée sur un film de base (9) réalisé en polyester ou sur un ruban réalisé en polyester,
dans lequel ladite couche conductrice (2) est disposée entre ladite couche support (1 ) et ladite couche intérieure thermoplastique (3)
dans lequel le matériau stratifié (4) est conformé en nappe pour former un tube continu (10) qui doit être rempli avec des produits à remplir et divisé en conteneurs individuels (46), et
la couche conductrice (2) est une mince couche de métal déposée en phase vapeur, qui est prévue au moins au niveau des zones (5, 7) qui doivent être thermo-soudées par chauffage à induction à haute fréquence pour produire et former les conteneurs (46).

2. Matériau stratifié selon la revendication 1, dans lequel ladite couche conductrice (2) comprend un matériau électriquement conducteur métallique.

3. Matériau stratifié selon l'une des revendications précédentes, dans lequel ladite couche conductrice (2) est déposée sur la surface extérieure dudit film de base (9) et/ou dudit ruban et/ou de ladite couche intérieure thermoplastique (3).

4. Matériau stratifié selon l'une des revendications précédentes, dans lequel ladite couche conductrice (2) est déposée sur la surface dudit film de base (9) et/ou dudit ruban et/ou de ladite couche intérieure thermoplastique (3).

5. Matériau stratifié selon l'une des revendications précédentes, dans lequel ladite couche conductrice (2) est déposée sur la surface intérieure de ladite couche support (1)

6. Matériau stratifié selon l'une des revendications précédentes, dans lequel ladite couche intérieure thermoplastique (3) est réalisée en polyéthylène.

7. Matériau stratifié selon la revendication 6, dans lequel ladite couche intérieure thermoplastique (3) est réalisée en polyéthylène à basse densité (LDPE) ou en polyéthylène à basse densité à chaîne linéaire (LLDPE).

8. Procédé pour produire un matériau stratifié conformé en nappe, utilisé pour un conteneur d'emballage (46), comprenant au moins une couche support (1) et une couche intérieure thermoplastique (3), qui inclut
la fourniture d'une couche support conformée en nappe (1) à partir d'un rouleau de matériau,
stratifier un film déposé en phase vapeur, comprenant un film substrat (9) réalisé en polyester et une couche de métal déposée en phase vapeur en un matériau métallique conducteur formé sur la surface intérieure ou sur la surface extérieure du film substrat (9), sur la surface intérieure de la couche support (1) au moins au niveau de zones (5, 7) où l'on mène un thermo-soudage par chauffage par induction à haute fréquence pour former le conteneur (46), l'impression d'un motif de conteneur indirectement ou directement sur la surface extérieure de la couche support conformée en nappe (1), et
la formation d'une sorte identique ou différente d'une couche thermoplastique unique ou d'une multiplicité de couches thermostatiques simultanément ou successivement sur la surface extérieure imprimée et sur la surface intérieure de la couche support conformée en nappe (1).

9. Procédé selon la revendication 8, dans lequel le procédé inclut en outre les étapes consistant
à prévoir une pluralité de rouleaux de matériau pour la couche support (1), et
à réunir l'extrémité supérieure de la couche support conformée en nappe (1) en amont avec l'extrémité postérieure de la couche support conformée en nappe (1) en aval, en formant ainsi une nappe de forme allongée.

10. Procédé pour thermo-souder un matériau stratifié, qui inclut les étapes consistant à :
fournir un matériau stratifié conformé en nappe qui est le matériau stratifié utilisé pour un conteneur d'emballage (46) comprenant au moins une couche support (1) et une couche intérieure thermoplastique (3), dans lequel une couche conductrice (2) est stratifiée entre la couche support (1) et la couche intérieure thermoplastique (3) au moins au niveau de zones (5, 7) dans lesquelles un thermo-soudage est mené par chauffage par induction à haute fréquence afin de former le conteneur (46) de telle manière que la chaleur produite par le chauffage par induction est menée à la couche intérieure thermoplastique (3), dans lequel la couche conductrice (2) est une couche mince comprenant sensiblement un matériau métallique conducteur formé par déposition en phase vapeur sur un film substrat (9) réalisé en polyester,
former le matériau stratifié conformé en nappe pour lui donner une forme tubulaire et appliquer une zone de soudure longitudinale (7) dans la direction longitudinale,
remplir le tube de matériau stratifié avec un produit alimentaire liquide,
former des zones thermo-soudées transversales (5) par le chauffage par induction à haute fréquence à chaque intervalle prédéterminé dans la direction transversale du tube rempli, et couper le centre de chaque zone soudée transversale (5),
en formant ainsi des conteneurs individuels (46).

11. Procédé selon la revendication 10, dans lequel la soudure longitudinale est formée par chauffage par induction à haute fréquence.

12. Conteneur d'emballage formé d'un matériau stratifié conformé en nappe comprenant au moins une couche support (1) et une couche intérieure thermoplastique (3), dans lequel une couche conductrice (2), d'une couche formée en film mince comprenant sensiblement un matériau conducteur métallique est formée par déposition en phase vapeur sur un film substrat (9) réalisé en polyester, est formée au moins au niveau de zones (5, 7) dans lesquelles un thermo-soudage est mené par chauffage par induction à haute fréquence pour former le conteneur (46), la couche intérieure est fondue ou ramollie par la chaleur générée par le chauffage par induction afin de former une zone soudée (5, 7) avec la couche intérieure opposée fondue ou ramollie.

13. Conteneur d'emballage pour produit alimentaire liquide formé d'un matériau stratifié conformé en nappe, ledit conteneur d'emballage (46) étant soudé en accord avec le procédé de soudage de la revendication 10 ou 11.
